# EUROPEAN PATENT APPLICATION

(11) **EP 2 953 290 A1**
(43) Date of publication of application: **09.12.2015**
(21) Application number: 14305864.2
(22) Date of filing: 06.06.2014
(51) Int. Cl.: H04L 9/08

(54) **Management of high number of unique keys by a secure element**

(71) Applicant: Gemalto SA, 92190 Meudon (FR)
(72) Inventor: Lu, HongQian Karen, 13705 LA CIOTAT (FR); Gouget, Aline, 13705 LA CIOTAT (FR); Castillo, Laurent, 13705 LA CIOTAT (FR); Olander, Johan, 13705 LA CIOTAT (FR)

(57) **Abstract**

The present invention relates to a method to manage high number of unique keys (K) by an hardware secure element (SE) having limited memory resources, said method comprising the steps of :
- under request (S1), generating (S2) a unique key (K) whenever needed for the performance of crypto operations,
- constructing (S3) at least an information (KI) enabling to recover the unique key (K),
- sending (S4), for storage (S40), the information (KI) to an external storage,
- deleting (S5) the generated unique key (K),
and, when the use of the unique key (K) is required, the steps of:
- retrieving (S6) the information (KI) from the external storage,
- recovering (S7) the unique key (K) from at least the information (KI) and a secret stored inside the secure element (SE) for the need of further crypto operations (Oij),
- once crypto operations are performed, deleting (S8) the recovered unique key.

## Description

### FIELD OF THE INVENTION

The present invention relates to a method to manage high number of unique keys by a hardware secure element having limited memory resources.

The invention also pertains to a hardware secure element implementing said method.

### BACKGROUND OF THE INVENTION

Secure elements, such as smart cards, SIM cards, and TEE, etc. have been providing security services in a large number of domains, such as telecom, banking, and government services. It is desirable to use secure elements to secure new products and services, such as file encryption, online authentication, and virtual currency/crypto money, e.g. Bitcoin.

Such distinct domains involve a large number of cryptographic keys for each user. In general, secure elements are provided with limited resources in term of memory and the management of great number of unique keys is not locally possible.

Concerning file encryption, cloud providers store a tremendous amount of data for their customers. They secure data files by encryption and typically manage the encryption keys by themselves or through third parties. However, this does not satisfy privacy, regulatory, and legal requirements for customers who prefer to or must manage keys themselves.

Using users' secure elements to manage encryption keys is a potential solution. However, as it is desirable that each data file is encrypted by a unique key, it requires that secure element is able to manage a large number of keys when a user has a large number of files.

Concerning the multi-factor online authentication, using PKI for online authentication requires that a unique authentication key pair for each (username, authentication server) pair is used. The username could be a pseudonym. Such uniqueness provides better security by preventing relay attacks, and better privacy by preventing linkage from the same or different authentication servers. A secure element can be used to generate the key pair and perform cryptographic operations required for the authentication. Any online authentication is thus concerned by the invention. A user typically interacts with a large number of websites, most of which have their own authentication servers. This results in a large number of keys that the secure element would have to manage when used in such application.

Concerning the virtual currency wallet application, to provide better privacy and isolate transactions, such a wallet has advantageously a large number of addresses and, hence, a large number of corresponding Elliptic Curve (EC) crypto key pairs. The use of a secure element for key pair generation, storage, and signing transactions would drastically enhance security. Similar as previous cases, the problem is to manage a large number of keys with very limited memory in secure elements.

Concerning file encryption, existing solutions generally let the consumer to store the encrypted encryption key with the encrypted data as an option. It is thus the consumer's responsibility to keep safe the master key that encrypts the encryption key.

Concerning virtual currency, deterministic wallets derive keys as needed but security remains weak.

Further alternative and advantageous solutions would, accordingly, be desirable in the art.

### SUMMARY OF THE INVENTION

The present invention aims at providing the well-known strong security offered by hardware secure elements even in context where high number of unique keys has to be managed.

The present invention is defined, in its broadest sense, as a method to manage high number of unique keys by an hardware secure element having limited memory resources, said method comprising the steps of:
- under request, generating a unique key whenever needed for the performance of crypto operations,
- constructing at least an information enabling to recover the unique key,
- sending, for storage, the information to an external storage,
- deleting the generated unique key,
and, when the use of the unique key is required, the steps of:
- retrieving the information from the external storage,
- recovering the unique key from at least the information and a secret stored inside the secure element for the need of further crypto operations
- once crypto operations are performed, deleting the recovered unique key.

This invention enables to protect a large number of crypto keys by a single resource constrained secure element. The crypto key may be a symmetric key or an asymmetric key pair. In the sequel, for simplicity and without confusion, we use the word "key" or symbol K to represent a symmetric key or an asymmetric key pair. In the context of key protection, "key" or K represents key or key pair needed to be protected. For an asymmetric key pair, most of the time, only private key needs protection unless the key pair is used for key derivation.

With the invention, hardware secure element drastically increases its capacity in terms of the quantity of managed keys. Today keys are kept inside hardware secure element which limits strongly the management capacity of hardware secure element.

The invention has the advantages to rely on a secure element to provide security and privacy to the user, the security being built on a combination of secure element and external storage. The invention protects the user privacy by providing a secure method for managing a large number of crypto keys.

According to a specific feature, the unique key generation step being triggered by an external application, the external storage is a memory storage the external application has access to.

This feature enables to centralize all the material necessary for the functioning of the application, except of course the knowledge of the key, inside a same application domain. According to another specific feature, said method includes a step of performing one or more crypto operations using the unique key before deleting it.

This feature corresponds to the use of the unique key by the secure element itself after it has been generated.

According to a first embodiment, the information includes the unique key encrypted with a key encryption key which is a secret key stored inside the hardware secure element.

This very simple embodiment presents a limited interest as all the unique keys are encrypted with the same key encryption key. Also the security of the key encryption key (KEK) freezes the security level of the keys encrypted with this key encryption key KEK. Other embodiments are thus desirable.

According to a particular feature, several key encryption keys being available onboard the hardware secure element, the information further includes a key encryption key's identifier.

This particular feature enables the secure element to know which key encryption key has to be used to recover the unique key by decryption. It also enables to strengthen security as the unique keys are not all encrypted using a same key encryption key.

According to a second embodiment, the information includes the unique key encrypted with a key encryption key and derivation information enabling said hardware secure element to derive the used key encryption key from a secret master key of the hardware secure element.

This embodiment enables not to necessarily store the key encryption key in the secure element. It gives to the invention a power to manage even a greater number of keys and on several levels.

According to a third embodiment, the information includes derivation information enabling said hardware secure element to derive the unique key from a secret master key of the hardware secure element.

Here the constructed information is light and there is only a need for the secure element to store a secret master key.

According to a fourth embodiment, the secure element storing a plurality of secret master keys, the information includes a secret master key identifier and derivation information enabling said hardware secure element to derive the unique key from the identified secret master key of the hardware secure element.

This embodiment requires the storage of several master keys but enables a great diversification of the generated unique keys.

According to a particular feature, a least a part of the information being public, this part of the information is stored in the external storage with use-case dependant information.

With this particular feature, the external storage of the information is simple while offering security as only the secure element is able to use such information to recover the unique key.

Advantageously, the public part of the information is derived from use-case dependant information.

In this case, only use-case dependant information needs to be stored in the external storage.

According to another particular feature, at least a part of the information being secret, said method comprises a step of encrypting the secret part of the information before sending the information to the external storage using a secret key of the hardware secure element.

This feature enables to protect any sensitive information constructed in order to enable the recovery of the unique key. Typically, derivation information could benefit from such a feature.

According to an application of the invention, the unique key is a master key of the hardware secure element.

The invention thus enables to keep a very small quantity of data inside the secure element and to store everything else needed for any key generation or derivation outside the secure element itself. Several levels of keys can thus be managed according to the invention. It exponentially enlarges the key management capacities of the secure device.

The present invention also relates to a hardware secure element having limited memory resources and managing a high number of unique keys, said hardware secure element implementing a method according to the invention.

Such a hardware secure element is able to manage huge number of unique keys using one or several embodiments of the invention on one or several levels.

According to specific application, the hardware secure element provides at least one feature chosen among the followings: file encryption with file associated key, multi-factor online authentication with unique authentication key, virtual money wallet with unique key for each virtual coin.

Those applications of the invention are use cases well-known to necessitate a great amount of keys to be managed.

To the accomplishment of the foregoing and related ends, one or more embodiments comprise the features hereinafter fully described and particularly pointed out in the claims.

### BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
- Figures 1A and 1B schematically show the method of the invention;
- Figures 2A and 2B illustrate a first example of an embodiment of the invention applied to a file encryption use case;
- Figures 3A and 3B illustrate a second example of an embodiment of the invention applied to a multifactor online authentication use case;
- Figures 4A and 4B illustrate a third example of an embodiment of the invention applied to a Virtual currency wallet use case.

### DETAILED DESCRIPTION OF EMBODIMENTS OF THE INVENTION

For a more complete understanding of the invention, the invention will now be described in detail with reference to the accompanying drawing. The same elements have been designated with the same reference numerals in the different drawings. For clarity, only those elements and steps which are useful to the understanding of the present invention have been shown in the drawings and will be described. The detailed description will illustrate and describe what is considered as preferred embodiments of the invention. It should of course be understood that various modifications and changes in form or detail could readily be made without departing from the spirit of the invention. It is therefore intended that the invention may not be limited to the exact form and detail shown and described herein, nor to anything less than the whole of the invention disclosed herein and as claimed hereinafter.

Further the features described in the description, the drawing and the claims disclosing the invention may be essential for the invention considered alone or in combination. In particular, any reference signs in the claims shall not be construed as limiting the scope of the invention. The wording "comprising" does not exclude other elements or steps.

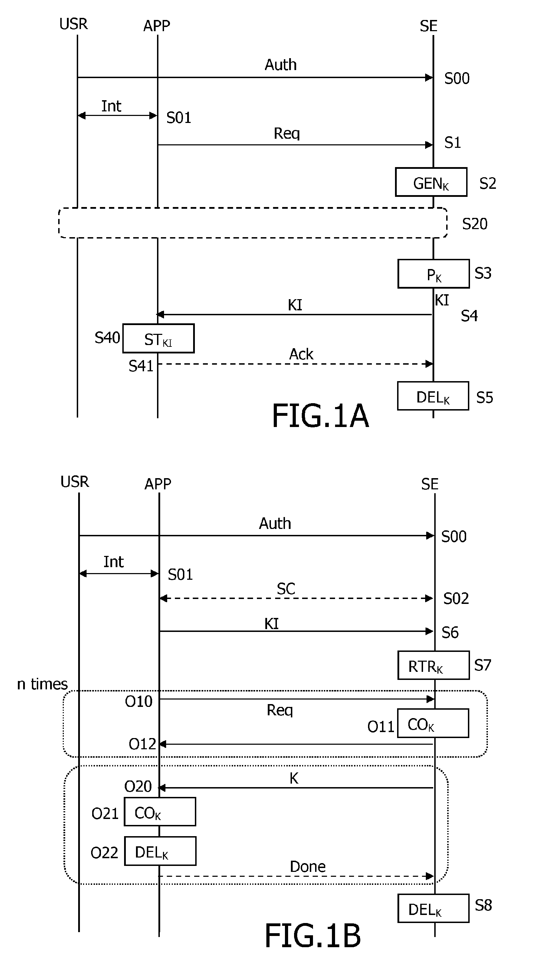

Figure 1A shows the first part of the method of the invention including key generation and protection.

The invention is here implemented in a context where a client application APP used by a user USR needs to proceed to cryptographic operations using a unique key K. For this purpose, the application APP appeals to a hardware secure element SE.

The secure element SE creates or is provisioned with one or a few secrets, and stores them in its secure memory in order to proceed to key generation.

In a preliminary step S00, the user USR authenticate to the secure element SE. Interactions are then occurring in a step S01 between the user USR and the application APP.

As a result of these interactions, in a step S1, the client application APP requests to create a new unique key K that can be a crypto key or a key pair providing certain context, such as key usage, type of key, data for key derivation, and input to crypto operation. The application APP can also request for the secure element SE to perform a crypto operation. The context could be empty.

In a step S2, the secure element SE creates a new key or key pair K. In the following specification, alternative embodiments are described with different ways of creating K.

If the application APP requests so, the secure element SE performs crypto operations using K in an optional step S20. Optional features are represented with dashed line on figures.

Then, in a step S3, the secure element SE protects K. In the following specification, alternative embodiments are described with different ways of protecting K. These embodiments all result in a piece of information KI enabling to recover the unique key.

According to the invention, this information KI is sent to an external storage in a step S4. In the method shown on figure 1, the external storage is a storage associated to the application APP. Thus, the secure element SE returns the information KI to the application APP.

The information KI is then stored in a step S40 in the external storage. Here the application APP stores the received information in a storage that it can access later on. It optionally sends an acknowledgment to SE.

At last, in a step S5, the secure element SE deletes K from its memory.

Figure 1B illustrates the usage of the unique key K. In preliminary steps S00 similar to the one of figure 1A, the user USR authenticate to the secure element SE. Interactions then occur between the application APP and the user USR in a step S01. The necessity to use the unique key K is revealed in these interactions. In an optional step S02, the secure element SE establishes a secure channel SC with the application APP.

Then, in a step S6, the application APP informs the secure element SE to start crypto operation by providing the information KI which is thus retrieved by the secure element SE from the external storage. Advantageously, a context is also provided. The context may be different from the context in Figure 1A.

Using the retrieved information KI, the secure element SE recovers the unique key K in a step S7.

The following alternative embodiments describe different methods for performing crypto operations using the key K.

Two alternatives, both represented inside two dotted rectangles, are then described on figure 1B.

In a first alternative, the secure element SE performs crypto operation using K. In a second alternative, the secure element SE returns K in order for the application APP to use it.

In the first case where the secure element SE performs the crypto operation, the application APP may request that the secure element SE perform it n (n>0) times. Each of these times, the application APP sends a request, in a step 010, to the secure element SE for performing a crypto operation CO_{K} on the data provided using K. In a subsequent step 011, the secure element SE performs the crypto operation using K on the data. Then, in a step 012, the secure element SE returns the result to the application APP.

In the case where the application APP performs crypto operation CO, in a step 020, the secure element SE sends K to the application APP which performs crypto operations CO_{K} using K in a step 021 and deletes K afterwards in a step 022. Optionally a performance message informing the secure element SE that the crypto operations were performed is sent by the application APP.

At last, in a step S8, the secure element SE deletes the key K.

This invention has at least four different embodiments. In the first two, the secure element generates a fresh key and in the other ones, the generation of the unique key is done by deriving it from a master key.

In the first embodiment, the SE maintains one or more key encryption keys KEK. When the client application APP requests, SE generates a fresh new key or key pair K based on the required key generation context received in step S1 in Figure 1A. The secure element SE uses a key encryption key KEK to encrypt K in order to protect the unique key K in step S3. The encrypted unique key EK obtained after encryption using key encryption key KEK constitutes at least a part of the information KI sent to external memory in step S4. Then the secure element SE deletes K from its secure memory in step S5.

Additional key information KeyInfo can be added. This key information KeyInfo is empty if there is only one KEK. It indicates which KEK is used if several KEK are available.

As the result, the client application receives the following:
KI: Encrypted key EK = Enc[KEK](K) and KeyInfo = Null if there is one KEK or an indicator of the used KEK.

In the step S40, the client application stores KI outside of the secure element SE.

When needing a crypto key for a crypto operation, the application APP sends the encrypted key EK, with or without the additional key information KeyInfo, to the secure element SE in a step S6. With a user's authorization, the secure element SE decrypts the encrypted key EK using the key encryption key KEK in the step S7. The secure element SE either performs the operation or sends the key K to the client application APP for it to use and then delete the key K in a step S8.

Various applications have different requirements. A specific embodiment is adopted accordingly. The key encryption key may be a symmetric key or an asymmetric key pair. A key management service, for example, the one that provisioned the secure element SE, can escrow the key encryption key. The client application may be a web server or a local client running on an end user's computer or mobile device.

In a second embodiment, the key encryption key KEK is a derived key from a master key encryption key mKEK using a key derivation function (KDF). With respect to Figure 1A, the secure element SE freshly generates a unique key K in step S2.

For each K, the SE encrypts K with a derived key encryption key KEK and then deletes KEK from its secure memory. In step 3, the secure element SE then prepares information KI comprising at least the encrypted key EK and additional key derivation information KeyInfo enabling the secure element SE to derive the key encryption key KEK.

According to an optional feature, this additional key derivation information KeyInfo can be further encrypted using another secret key K_{DI} of the secure element SE.

In step S4, the client application APP receives the following from the SE:
KI: Encrypted key EK = Encr(K) = Enc[KEK](K) and additional key derivation information KeyInfo= "how to derive KEK from mKEK".

When the client application APP needs a crypto operation, it presents KI in a step S6. Other application specific information can also be presented.

If needed, the secure element SE first decrypts the additional key information KeyInfo to obtain the plain key derivation information. Then the secure element SE derives the key encryption key KEK from the master key encryption key MKEK. Then it recovers K by decryption in step S7. Crypto operations are then performed by the secure element SE or unique key K is sent for the client application APP to use it.

In a third embodiment, the secure element SE derives unique keys or unique key pairs from a seed (or master key or key pair) instead of generating independent unique key or unique key pairs, and from an additional derivation information KeyInfo, e.g. a predetermined constant value, a counter, an arbitrary value, a verifiable value or another secret seed. The secure element SE stores the seed securely in its secure memory and has access to the additional derivation information KeyInfo. It thus derives unique keys as needed.

According to the invention, the derivation information KeyInfo is stored externally, either encrypted using a key encryption key or in clear text.

Thus, with respect to Figure 1A, at the client application's APP request in step S1, the secure element SE derives the unique K in step S2. In the asymmetric key case, the secure element SE derives the public key. The secure element SE constructs information KI including at least the derivation information KeyInfo in step S3. KI is then sent to the client application APP.

As the result, the client application APP receives the following:
KI: derivation information KeyInfo= "how to derive K from the master key"

Various options given below can be applied to protect the derivation information KeyInfo.

Then, with respect to figure 1B, the client application APP presents the information KI including the derivation information KeyInfo. The secure element SE then derives the key in step 7 from the seed stored in the secure element itself and from the additional derivation information KeyInfo.

In a fourth embodiment, the secure element SE generates or is provisioned with a plural of master (e.g. ECDSA) key pairs and stores them in its secure memory. For each master key pair, the secure element SE associates additional derivation information, e.g. a predetermined constant value, a counter, an arbitrary value, a verifiable value or a secret seed.

When the client application APP needs a new public key in step S1, the secure element SE does the same as in the previous embodiment, except that it chooses from one of the master key pairs and its associated counter to derive a new public key.

In step S4, the client application receives the constructed information KI comprising derivation information KeyInfo = "how to derive K" and "from which master key".

When the client application APP needs an operation using the private unique key K, it does the same as the previous embodiment giving the information KI to the secure element SE in step S6. The secure element SE may need to decrypt the information KI. With the information KI, the secure element SE finds the necessary elements to derive the unique key: the master key to be used, a counter and optionally other data such as an additional secret seed, and recover the private unique key K by derivation in step S7.

This embodiment is very similar to the previous one except the content of the information KI which includes an indication of which master key is used.

In all of the three last embodiments, an additional information KeyInfo is used. This additional information KeyInfo can be made public, or at least one part of it. The client application APP can then store this information with other relevant information that is use-case dependent. Alternatively, the public part of the additional information is derived from client's data and, hence, no additional storage is necessary.

Additional information KeyInfo can also be secret, e.g. half of the secret key is stored in the secure element SE and the other half of the secret key is stored encrypted externally. The secure element SE then encrypts the additional information using another secret key, K_{DI}.

The client application APP then stores the encrypted additional information with other relevant information that is use-case dependent. For example, the secure element SE encrypts the additional information KeyInfo that indicates which master key and which counter, and gives this encrypted information to the client application APP for keeping.

Examples:
KeyInfo = index of the KEK
KeyInfo = Enc[K_{DI}]("which master key" ∥ "which counter")
KeyInfo = Enc[K_{DI}]("which master key" ∥ "which counter"∥ additional secret seed)

It is here noted that the essence of the previous embodiments can be combined as needed. For example, the secure element SE generates a plural of master key pairs. Instead of storing these master key pairs in its secure memory, it encrypts these master key pairs using the schemes in the first and second embodiments. The encrypted master key pairs are thus stored outside of its memory. Optionally, the authenticity of the encrypted data can also be guaranteed, e.g. using authenticated encryption.

### Applications

All embodiments can apply to all three use cases above described in the introductory part. Here are presented three examples of embodiments of the invention as applied to each one of the three use cases, respectively.

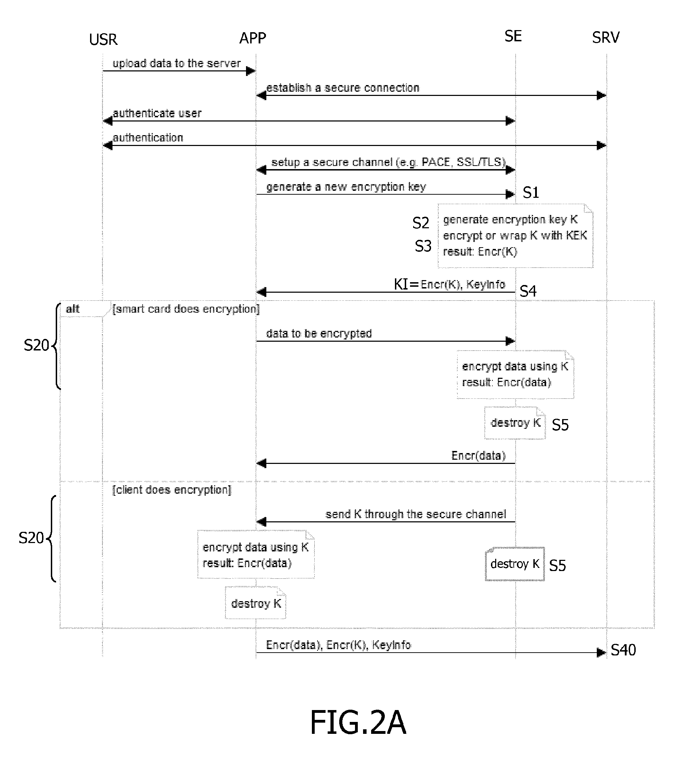

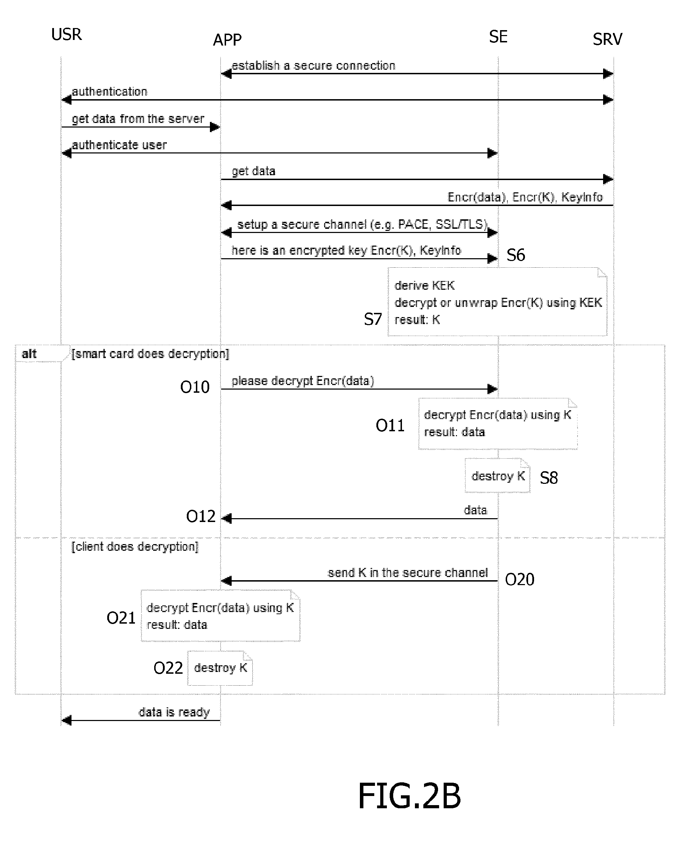

The first example concerns file encryption using second embodiment. It is illustrated by figures 2A and 2B.

Once preliminary steps of authentication and of secure connection with a mass storage server SRV are processed, a request for a new encryption key is performed in a step S1 by the application APP.

The secure element SE is provisioned with and stores a master key encryption key (mKEK) in its secure storage. It derives a new key encryption key KEK from mKEK as needed based on certain criteria, for example, using the file name or hash as a parameter.

For each data file to be uploaded to the storage service, in a step S2, the SE generates an encryption key K, which is typically a symmetric key for performance reasons. Then, in a step S3, the SE uses a KEK to encrypt or key-wrap K (data encryption key). Information KI is constructed from the encrypted unique key Encr(K) and the additional information KeyInfo about KEK.

The secure element SE or the client application APP uses K to encrypt the data in a step S20. In both cases, the secure element SE does not track which encryption key K is used for which data file. The encryption key K is indeed deleted in a step S5.

Then the client application APP sends the data to the storage service server SRV. Thus, in a step S40, the information KI including the encrypted or wrapped key Encr(K) and additional information KeyInfo is stored with the encrypted data Encr(data) on the storage provider side server SRV. It is here noted that the external storage associated to the application APP is not local but hosted by a server SRV, which may be a cloud service.

Retrieving the data file goes through a reverse process presented on figure 2B. The secure element SE uses additional key information KeyInfo received in a step S6 from the client application APP to derive KEK. Then it uses the KEK to decrypt or un-wrap the file encryption key K in a step S7. Said file encryption key K is then used to decrypt the data file Encr(data).

It is noted here that the encryption key K is always destroyed after use and that the "authenticate user" step may be optional if the user has already used the secure element SE to authenticate to the server.

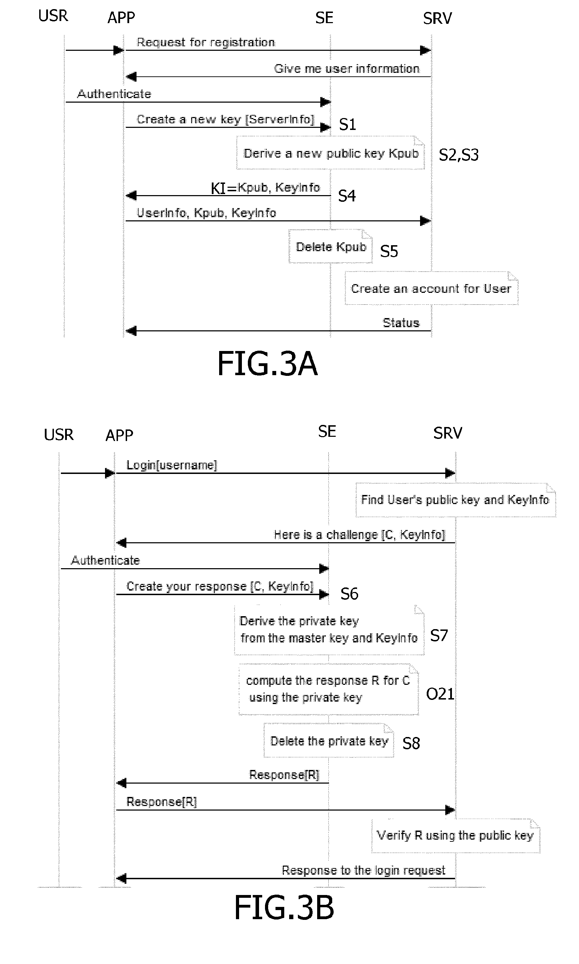

The second example concerns multi-factor online authentication using the third embodiment. It is illustrated on figure 3A and 3B. The authentication uses an authentication key K, which can be a key for, but not limited to, ECDSA, ECIES, RSA-PSS, or RSA-OAEP. The secure element SE is provisioned with a master key pair.

For each authentication server SRV, when the user USR registers with it as shown in the preliminary steps of figure 3A, the secure element SE is requested in a step S1 to derive a new public key K=Kpub from the master key.

The constructed information KI includes the public key Kpub and additional derivation information KeyInfo. The additional information KeyInfo may be encrypted as explained earlier. The constructed information KI is sent to the server for keeping.

Then as shown on figure 3B, when the user USR wants to authenticate to the server SRV, the server SRV sends a random challenge along with the information KI including public key Kpub and additional derivation information KeyInfo to the secure element SE in a step S6. After user authentication to the secure element SE, the secure element SE derives the corresponding private key from the master private key and the decrypted additional information KeyInfo in a step S7.

The secure element SE uses the new private key to compute a response from the challenge in a step 021 of cryptographic operations. It sends the response and deletes the private key in a step S8.

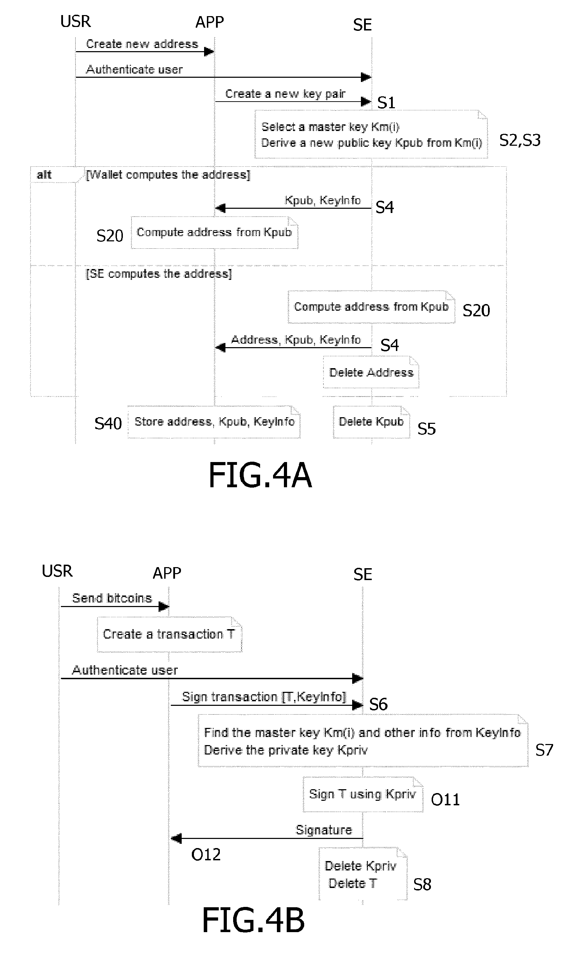

The third example concerns a Virtual currency wallet using the fourth embodiment. This example is illustrated on figure 4A and 4B.

In this use case, the secure element SE works with a Virtual currency wallet, which is the client application APP. Virtual currency uses ECDSA for signing transactions. The secure element SE generates (or is provisioned with) and stores multiple master key pairs securely in its secure memory. It also creates and keeps derivation information. When the wallet needs a new Virtual currency address, the Wallet application APP asks, in a step S1, the secure element SE to generate a new key pair. In a step S2, the secure element SE derives a new public key Kpub from a master public key and some additional derivation information KeyInfo. It constructs an information KI from this new public key Kpub and the additional derivation information KeyInfo in a step S3.

Then in a step S4, the secure element SE gives the constructed information KI including the public key Kpub and the additional derivation information KeyInfo to the wallet application APP to keep. The additional information KeyInfo includes, for example, an index of the master key and a counter. KeyInfo can be in plain text in this case. The counter corresponding to this master key is updated by the secure element SE for key derivation purposes.

In a step S20, the Wallet application or the secure element SE generates the address from the public key Kpub.

Then in a step S5, the secure element SE deletes the newly derived public key Kpub.

Then the wallet application APP uses the address to receive virtual currency. When the wallet application APP needs to spend virtual currency, the Wallet application APP finds the previous transaction to the owner and the corresponding public key Kpub and additional information KeyInfo associated with it.

The application Wallet APP then creates a new transaction and thus asks the secure element SE to sign the transaction and consequently gives the additional information KeyInfo to the secure element SE in a step S6.

In a step S7, the secure element SE derives the private key from the master private key and the derivation information KeyInfo. Then it uses the private key to sign the new transaction in a step 011 and returns the signature to the wallet application APP in a step 012.

At last the secure element SE deletes the transaction and the private key from its memory in a step S8.

In the data encryption case, unique key K is the data encryption key, in the multifactor authentication case, unique key K is the authentication key and, in the Virtual currency case, the unique key K is the private key corresponding to a Virtual currency address.

The present invention is not limited to the above three use cases. In general, different from existing secure element applications, new products and services need protection of a large number of cryptographic keys for each individual user. As secure elements have a limited memory capacity, the solution of this invention enables them to manage a large number of keys using a resource constrained secure element. The invention indeed applies in any situation where a large number of cryptographic keys has to be managed using a resource constrained secure element.

In the above detailed description, reference is made to the accompanying drawings that show, by way of illustration, specific embodiments in which the invention may be practiced. These embodiments are described in sufficient detail to enable those skilled in the art to practice the invention. It is to be understood that the various embodiments of the invention, although different, are not necessarily mutually exclusive. For example, a particular feature, structure, or characteristic described herein in connection with one embodiment may be implemented within other embodiments without departing from the spirit and scope of the invention. The above detailed description is, therefore, not to be taken in a limiting sense, and the scope of the present invention is defined only by the appended claims, appropriately interpreted, along with the full range of equivalents to which the claims are entitled.

## Claims

1. Method to manage high number of unique keys (K) by an hardware secure element (SE) having limited memory resources, said method comprising the steps of :
- under request (S1), generating (S2) a unique key (K) whenever needed for the performance of crypto operations,
- constructing (S3) at least an information (KI) enabling to recover the unique key (K),
- sending (S4), for storage (S40), the information (KI) to an external storage,
- deleting (S5) the generated unique key (K),
and, when the use of the unique key (K) is required, the steps of:
- retrieving (S6) the information (KI) from the external storage,
- recovering (S7) the unique key (K) from at least the information (KI) and a secret stored inside the secure element (SE) for the need of further crypto operations (Oij),
- once crypto operations are performed, deleting (S8) the recovered unique key.

2. Method according to claim 1, wherein, the unique key generation step (S2) being triggered by an external application (APP), the external storage is a memory storage the external application (APP) has access to.

3. Method according to claim 1, wherein, said method includes a step of performing one or more crypto operations (S20) using the unique key before deleting it.

4. Method according to claim 1, wherein the information (KI) includes the unique key (K) encrypted with a key encryption key (KEK) which is a secret key stored inside the hardware secure element (SE).

5. Method according to claim 4, wherein several key encryption keys (KEK) being available onboard the hardware secure element (SE), the information (KI) further includes a key encryption key's identifier.

6. Method according to claim 1, wherein the information (KI) includes the unique key (K) encrypted with a key encryption key (KEK) and derivation information (KeyInfo) enabling said hardware secure element (SE) to derive the used key encryption key (KEK) from a secret master key of the hardware secure element (SE).

7. Method according to claim 1, wherein the information (KI) includes derivation information (Keyinfo) enabling said hardware secure element (SE) to derive the unique key (K) from a secret master key of the hardware secure element (SE).

8. Method according to claim 1, wherein, the secure element (SE) storing a plurality of secret master keys, the information (KI) includes a secret master key identifier and derivation information (KeyInfo) enabling said hardware secure element (SE) to derive the unique key (K) from the identified secret master key of the hardware secure element (SE).

9. Method according to one of claims 4 to 7, wherein, a least a part of the information (KI) being public, this part of the information (KI) is stored in the external storage with use-case dependant information.

10. Method according to claim 8, wherein the public part of the information (KI) is derived from use-case dependant information.

11. Method according to one of claims 4 to 7, wherein, at least a part of the information (KI) being secret, said method comprises a step of encrypting the secret part of the information (KI) before sending the information (KI) to the external storage using a secret key of the hardware secure element (SE).

12. Method according to one of the preceding claims, wherein the unique key (K) is a master key of the hardware secure element (SE).

13. Hardware secure element (SE) having limited memory resources and managing a high number of unique keys (K), said hardware secure element (SE) implementing a method according to one of the preceding claims.

14. Hardware secure element according to claim 12, providing at least one feature chosen among the following: file encryption with file associated key, multi-factor online authentication with unique authentication key, virtual money wallet with unique key for each virtual coin.
